# EUROPEAN PATENT SPECIFICATION

(11) **EP 2 628 620 B1**
(45) Date of publication and mention of the grant of the patent: **08.04.2015**
(21) Application number: 12156000.7
(22) Date of filing: 17.02.2012
(51) Int. Cl.: B60J 10/00

(54) **Tool for the assembly of elastomeric seals**
Werkzeug zur Montage von Elastomerdichtungen
Outil pour l'assemblage de joints élastomères

(43) Date of publication of application: 21.08.2013
(73) Proprietor: Standard Profil A.S., 34367 Elmadag- Istanbul (TR)
(72) Inventor: Yilmaz, Sertac, 81620 Duzce (TR); Alaf, Tolga, 81620 Duzce (TR); Yüksel, H. Tuncay, 81620 Duzce (TR); Sarilar, A. Sinan, 45000 Manisa (TR)
(74) Representative: Wunsch, Alexander

(56) References cited:
- EP-A1- 0 822 019
- WO-A1-2011/045494
- US-A1- 2010 300 170

## Description

### 1. Field of the invention

The present invention relates to a tool for the assembly of elastomeric seals. In particular, the tool enables manufacturers to assemble an elastomeric seal onto flanges of doors of an automotive vehicle with an improved assembly quality.

### 2. Prior art

Doors of automotive vehicles are commonly sealed by elastomeric seals in order to prevent the intrusion of water or noise into the cabin of the automotive vehicle. In many cases, these elastomeric seals were mounted by hand. The workers applied the elastomeric seals by hand and clamped it with hand-tools, or with pneumatic, hydraulic or electric tools. This way of mounting elastomeric seals is slow and inefficient and - in addition - it is very uncomfortable for the workers. Therefore, elastomeric seals are also mounted by semiautomatic or automatic robot devices. By means of such robot devices, the efficiency of the mounting procedure is heavily improved. However, these semiautomatic or automatic robot devices have the disadvantage of lacking flexibility in their adaption to other sealing profiles and in addition they show the disadvantage of an inconsistent pressure application to the elastomeric seals. Therefore, the so called clamping force varies and thus the assembly quality decreases.

The EP 0 822 019 A shows a tool for roll crimping a flange cover. The tool comprises a driven fixed roller and a driven displaceable roller, wherein the fixed roller and the displaceable roller are driven by the same drive means. A similar tool is known from the WO 2011/045494 A1.

The EP 1 440 831 A2 shows a mounting device for elastomeric profiles. The device uses a short stroke cylinder in order to apply a constant retention force on the profile that is to be assembled.

The EP 0 778 172 B1 shows an apparatus for assembling sealing- and covering-strips. The apparatus comprises a roller that acts on the sealing and is movable on a flange of a car body part.

The US 5,065,486 shows a robot tool for applying a sealing strip to a flange comprising two rollers which are contra-rotated by a motor. The rollers engage opposite sides of the sealing strip to press it onto the flange. An additional nondriven roller applies a downward pressure onto the sealing strip.

A further robot tool for the assembly of a sealing is shown in the US 4,620,354. The EP 0 449 705 B1 discloses another robot tool for the assembly of a sealing to a door flange of a motor vehicle. The robot tool includes two motorized rollers that cooperate with a non-motorized roller for extending a C-shaped portion of the sealing prior to the assembly to the flange by a fourth roller.

Based on the above-mentioned prior art, it is an underlying problem of the present invention to provide a tool for the assembly of elastomeric seals that is more flexible in the application and can be used for different kinds of seals. Further the tool should provide a better assembly quality than prior art tools, should be easy to handle and should be less complex than prior art tools. Moreover, the tool should provide the ability of fast and easy adaption to various kinds of elastomeric seals.

### 3. Summary of the invention

The above-mentioned problems are solved by a tool for the assembly of elastomeric seals according to claim 1 as well as by a method for the assembly of elastomeric seals according to claim 11.

Particularly, the above-mentioned problem is solved by a tool for the assembly of elastomeric seals, comprising a first roller unit with a first seal assembly roller that is motor-driven via a gearing, a second roller unit with a second seal assembly roller motor-driven via a gearing, wherein the second seal assembly roller rotates with the same speed as the first seal assembly roller but in opposite rotation direction, wherein the first seal assembly roller and the second seal assembly roller comprise parallel rotation axes and the distance between the rotation axes is variable, a thrust control module that presses the first roller unit against the second roller unit, and an adjusting plate arranged between the thrust control module and a tool body for pre-adjusting the predetermined and variable distance between the first seal assembly roller and the second seal assembly roller by modifying the position of the piston stroke range relative to the tool body.

The tool is preferably used to locally compress and secure elastomeric seals having an internal U-shaped sheet metal strip to a flange of a car body.

The tool is capable of being used for many kinds of elastomeric seals since the distance between the rotation axes of the driven rollers of the roller units is variable. The thrust-control module can be adapted very flexibly to the desired use case by varying the clamping force without modifying the constructive setup of the tool. The thrust-control module further guaranties a constant clamping force applied to the assembly rollers during the assembly of the seal independent from the actual distance of the assembly rollers.

The tool for the assembly of elastomeric seals further comprises an adjusting plate arranged between the thrust control module and a tool body. Such an adjusting plate is used for pre-adjusting the predetermined and variable distance between the first seal assembly roller and the second seal assembly roller. Since the thrust control module is only able to realize a specific range of operation, for example has a limited cylinder stroke, by such adjusting plates of different dimensions the predetermined position of the second roller unit can be adjusted to seals having a significant different width. Thus, the same thrust module can provide the desired constant clamping force during assembly of seals of significant different width for totally different applications.

Due to the adjusting plate the tool can further easily be changed to be used for other seals. By the use of such adjusting plates, it is not necessary to use different assembly tools for different seals. The adjusting plate can be exchanged very quickly and simply by an adjusting plate having a different width.

The thrust control module can preferably be pressurized by air for maintaining a constant pressure without complex control devices.

The rotation axes of the first seal assembly roller, the second seal assembly roller and the common hinge are parallel what guaranties the same angle and the same height-position of the first seal assembly roller and the second seal assembly roller to each other. Thus, the distance between the first and second seal assembly rollers and their position in view of the mountable flange has no impact to the angle between the flange and one of first seal assembly roller and second seal assembly roller.

The clamping force between the first seal assembly roller and the second seal assembly roller as well as the distance between the first seal assembly roller and a second seal assembly roller are adjustable independently from each other. By doing so, the flexibility of the tool for the assembly of elastomeric seals is further improved.

Preferably, the tool does not comprise a spring that presses the seal assembly rollers away from each other. The thrust control module of the present invention is able to control the movement of the first and second seal assembly rollers in both directions, towards each other and away from each other. Thus, the construction of the tool is much more simplified, because no springs or other means are necessary, that press the seal assembly rollers away from each other.

Preferably, the gearing is arranged so that the first seal assembly roller and the second seal assembly roller stay always in force-transmitting connection independent from the distance between the first seal assembly roller and the second seal assembly roller. Since the gearing is arranged so that the first seal assembly roller and the second seal assembly roller stay always in force transmitting connection independent from the distance between the first seal assembly roller and the second seal assembly roller both seal assembly rollers can be driven independently from the actual distance between them. Therefore, the tool can react on dimensional variations of the flange to which the seal is assembled.

Preferably, the first seal assembly roller and the second seal assembly roller are driven by a common motor device via the gearing. Only one common motor device is preferably used for the tool which makes it cost efficient and easy to control. The gearing ensures a rotation with the same speed of the first seal assembly roller and the second seal assembly roller but in opposite rotation directions.

Preferably, the motor device can rotate clockwise and counterclockwise. This also improves the flexibility to use the tool for different use cases, because by being able to rotate clockwise and counterclockwise, it is possible to work in both directions - in view from the starting point - leftwards and rightwards

Preferably, the thrust control module comprises an adjustable thrust force. By adjusting the thrust force, it is possible to adapt the tool for the assembly of elastomeric seals to different use cases and different seals. One possible option for adjusting the thrust force is the control of the air pressure that is provided to the thrust control module, if the thrust control module comprises a pneumatic cylinder.

Preferably, the thrust module comprises a pneumatic cylinder. The pneumatic cylinder and a corresponding pneumatic system is a very efficient way to control the constancy of the applied clamping force. This can be done by simply keeping the air pressure constant independently from the distance of the seal assembly rollers. In other embodiments it is also possible to use hydraulic cylinders or any other device that can maintain a constant pressure onto the second roller unit.

Preferably, the thrust control module is pivotally fixed by a thrust module fixation part to the second roller unit. This enables a constant connection between the thrust control module and the second roller unit. By this thrust module fixation part the first and second roller units pivot to each other into specific positions of the tool, in particular when there is no elastomeric seal located between the first and second seal assembly roller.

Preferably, the first seal assembly roller and the second seal assembly roller are connected to each other by a first lever of the first roller unit, a common hinge and a second lever of the second roller unit. This arrangement allows the flexible adjustment of the distance between the rotation axis of the first seal assembly roller and second seal assembly roller in order to provide a constant clamping force independent from the position of the first and second roller elements.

Preferably, the gearing consists of at least four transmission gears wherein one transmission gear is arranged to rotate around a rotation axis of a common hinge of the first and second roller units. Thereby, it is ensured that the force transmission between the first seal assembly roller and the second seal assembly roller is independent from the distance between the first seal assembly roller and the second seal assembly roller.

Preferably, the gearing comprises a sequence of gears which stay always in force transmitting connection independent from the distance between the first seal assembly roller and the second seal assembly roller, wherein the first gear is mounted to the drive shaft of the motor device that drives the first seal assembly roller, a second gear and a third gear are rotatably fixed to the first lever, a fourth gear is arranged to rotate around the rotation axis of the common hinge, a fifth gear is rotatably fixed to the second lever and a sixth gear is fixed to the second seal assembly roller. Preferably the gearing comprise at least four transmission gears. In a preferred embodiment, the gearing of the tool comprises six gears. In general, all even numbers of gears - in a continuous sequence one after the other - of four and higher numbers are possible in order to ensure that the first and second roller units rotate in opposite rotation directions.

The above-mentioned problem is also solved by a method for the assembly of elastomeric seals to a car body by means of a tool, the method comprising the steps of:
a. arranging an adjusting plate between a thrust control module and a tool body for pre-adjusting a predetermined and variable distance between a first seal assembly roller and a second seal assembly roller by modifying the position of a piston stroke range relative to the tool body;
b. arranging an elastomeric seal between the first seal assembly roller and the second seal assembly roller;
c. driving the first seal assembly roller and the second seal assembly roller in contrary rotation directions; and
d. inducing a predetermined clamping force between the first seal assembly roller and the second seal assembly roller by means of a thrust control module.

This method guaranties a constant clamping force between the first seal assembly roller and the second seal assembly roller by the use of a thrust control module. Further, since the seal assembly rollers are rotated in contrary rotation directions the tool for the assembly of elastomeric seals moves constantly along the flange of the car body and the seal is mounted with less effort for the user. Both measures increase significantly the assembly quality.

The method for mounting elastomeric seals comprises the step of arranging an adjusting plate between the thrust module and a tool body. By such an adjusting plate the predetermined distance between the first seal assembly roller and the second seal assembly roller can be easily and fast pre-adjusted in its width. The predetermined position of the second roller unit can preferably be set to the center of the range of operation of the thrust control module.

Preferably, in step d. the clamping force is controlled during the assembly process in order to keep the predetermined clamping force constant. By this step it is possible to control the clamping force constantly during the assembly process to keep this clamping force as constant as possible in order to achieve a homogeneous assembly result and thus a higher sealing quality.

Preferably, the first seal assembly roller and the second seal assembly roller stay always in force transmitting connection independent from the distance between the first seal assembly roller and the second seal assembly roller by means of a gearing.

Preferably, the method for mounting elastomeric seals further comprises the step of exchanging the thrust control module in order to provide a different predetermined clamping force. Dependent on the used thrust control modules and the current use case, it may be possible that the predetermined clamping force exceeds the range of operation of the thrust control module. Therefore, it is possible to change the thrust control module in order to adapt the tool to the specific use case. Thus, it is possible to further increase the flexibility of the tool for the assembly of elastomeric seals.

Further preferred embodiments result from the dependent claims.

### 4. Short description of the drawings

In the following, preferred embodiments of the invention are described with respect to the drawings in which shows:
- Fig. 1: a schematic side view of an embodiment of the tool for the assembly of elastomeric seals;
- Fig. 2: a side view of the tool for the assembly of elastomeric seals of Fig. 1, wherein the tool body is cut away in order to disclose the inner parts of the tool;
- Fig. 3: a three-dimensional view of the tool for the assembly of elastomeric seals of Fig. 1, wherein the tool body is partially cut in order to disclose the interior components of the tool;
- Fig. 4: a three-dimensional view of the tool for the assembly of elastomeric seals of Fig. 1 from below, wherein the tool body is cut in order to disclose the interior components of the tool;
- Fig. 5: a three-dimensional view of the first roller unit and the second roller unit of the tool for the assembly of elastomeric seals of Fig. 1, with their connecting hinge and the connecting gears; and
- Fig. 6: a schematic side view of the tool for the assembly of elastomeric seals of Fig. 1, during a positioning step and during an assembly step.

### 5. Description of preferred embodiments

In the following preferred embodiments of the invention are described with respect to the accompanying figures.

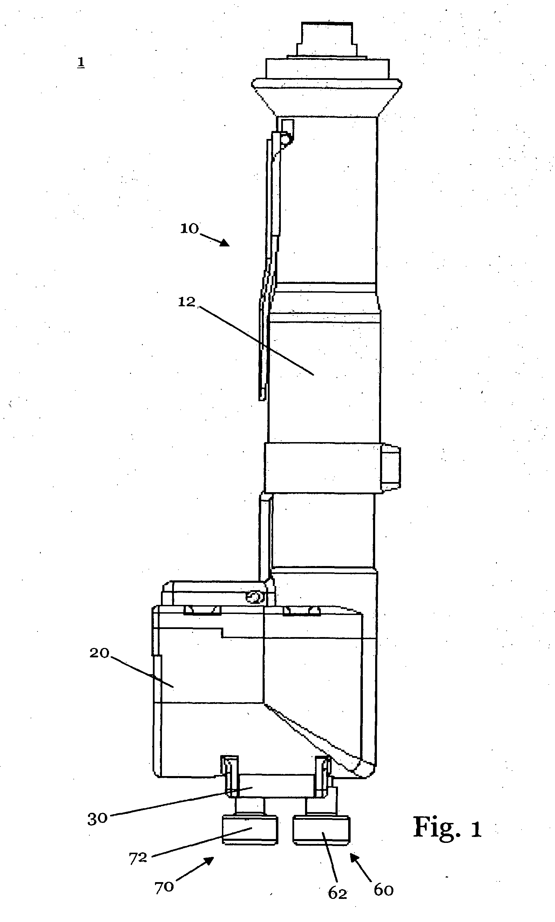

Figure 1 shows a schematic side view of the tool for the assembly of elastomeric seals 1 that is used to assemble seals 2 to the car body of a motor vehicle (not shown). The tool 1 comprises a shaft 10 in which a motor device 12 is arranged. The motor device 12 may preferably be a pneumatic motor and may be driven in different direction and with different speeds. The motor device 12 may additionally comprise a reduction gear to reduce the driving speed of its main shaft. The shaft 10 may be manually held during assembly by an assembly person or can be attached to any semiautomatic or automatic robot device.

A tool body 20 is connected to the shaft 10, wherein that tool body 20 houses a gearing 50, a first roller unit 60 with a first seal assembly roller 62 and a second roller unit 70 with a second seal assembly roller 72. Attached to the tool body 20 is also seal thrust roller 30 that has a rotating axis perpendicular to the rotation axes of the first and second seal assembly rollers 72, 62. By means of the seal thrust roller 30 the seal 2 can be additionally pressed laterally to a flange 3 of the car body to which the seal 2 is to be mounted. The seal thrust roller 30 may be separately driven by a motor (not shown) or driven via a gearing by the motor 12, that drives the seal assembly rollers (62, 72) (not shown) or may be a passive roller as it is shown in Fig. 1.

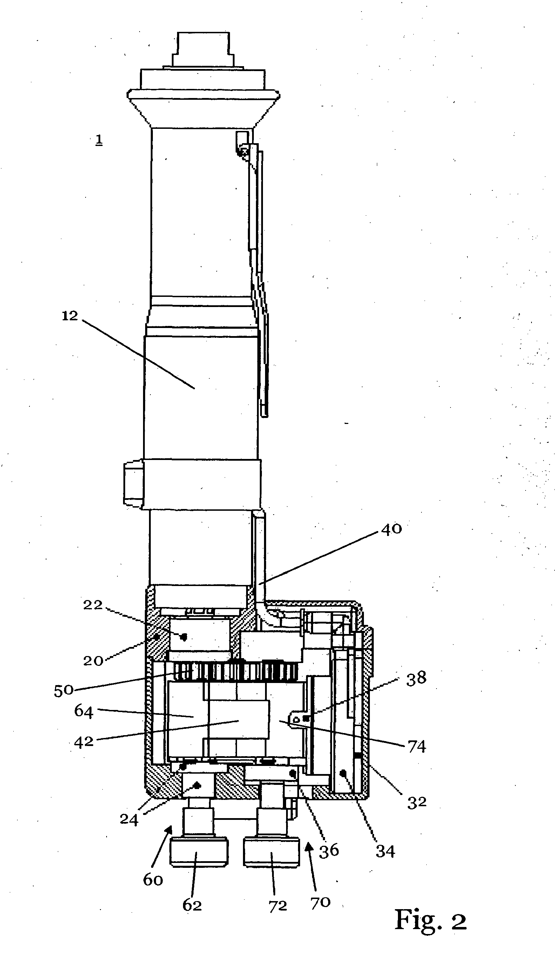

Figure 2 shows a side view of the tool for the assembly of elastomeric seals 1 wherein the tool body 20 is cut in order to show the interior components of the tool 1. The tool body 20 comprises several bushings, for instance a drive shaft bushing component 22 and drive shaft bushings 24 that support the drive shaft of the motor device 12.

The first roller unit 60 comprises a first lever 64 at which the first seal assembly roller 62 is rotatably mounted around a roation axis 66. The second roller unit 70 comprises a second lever 74 at which the second seal assembly roller 72 is rotatably mounted around a roation axis 76. The first lever 64 and the second lever 74 are connected to each other via a common hinge 42. The common hinge 42 allows that the second roller unit 70 can laterally move with respect to the first roller unit 60 in order to adjust the distance between the second seal assembly roller 72 and the first laterally fixed seal assembly roller 62.

The tool body 20 further contains a trust control module 34 that is connected on the first end via a thrust module fixation part 38 to the second lever 74 and on the other end to an adjusting plate 32. The thrust module fixation part 38 is pivotably connected to the second lever 74 to apply a pressure force thereto.

An adjusting plate is arranged between the trust control module 34 and the tool body 20. To adjust the tool 1 to different seals 2 and flanges 3 different adjusting plates 32 having different thicknesses can be used.

Preferably, the thrust control module 34 is a common short stroke cylinder. These cylinders are characterized by a short stroke range of the piston in order to keep the stability of the cylinder high and the costs low.

By the use of adjusting plates 32, the adaption of the tool 1 to different thicknesses of seals can be done very easily and there is no need to use other tools for different seal widths. The relative position of the piston stroke range in view of the tool body 20 will be modified by exchanging the built-in adjusting plate 32. Thus, it is not necessary to hold different expensive tools for different thicknesses of seals. Contrary, only some cheap adjusting plates 32 with differing thicknesses have to be held available. Thus, the tool according to this invention comprises much less operation costs than various different tools of the prior art.

The exchange of the adjusting plate 32 can be carried out tool-free, i.e. without using any tools like screw drivers, tongs or the like. That keeps the exchange of the adjusting plate 32 simple and results in much shorter adaption times. To this end the tool 1 comprises a quick coupling connection or snap fit connection between the adjusting plate 32 and the tool body 20 or the thrust control module 34.

Further, it is possible to use more than one adjusting plate 32 at the same time in order to combine adjusting plates 32 of different widths to form a set of adjusting plates 32 with the exactly desired width.

The trust control module 34 preferably comprises a pneumatically driven pneumatic cylinder. The pneumatic cylinder of the trust control module 34 is fed via a pressurized air support 40 with pressurized air. During use of the tool 1 the pressure of the air is kept constant such that the thrust control module 34 applies a constant thrust force to the second roller unit 70. This guaranties a constant clamping force between the first and second seal assembly rollers 62, 70.

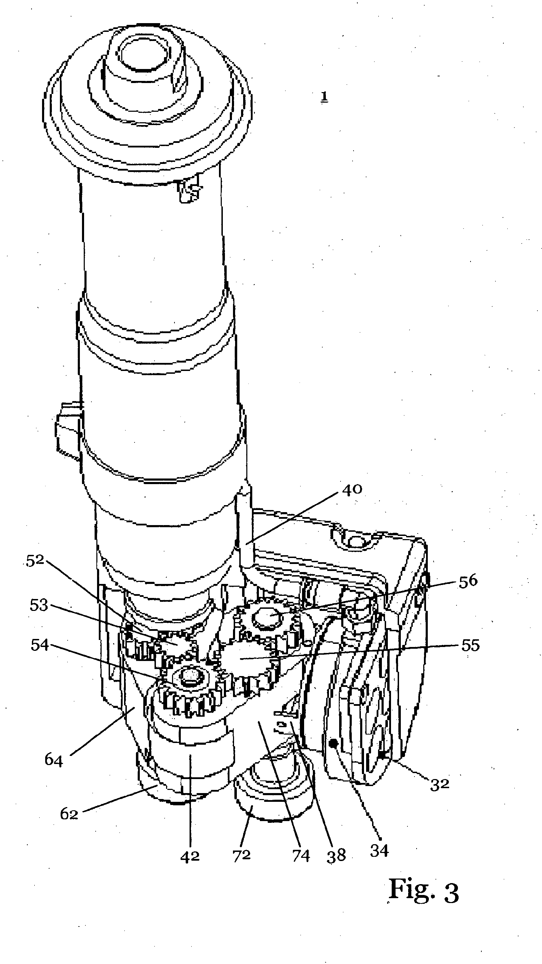

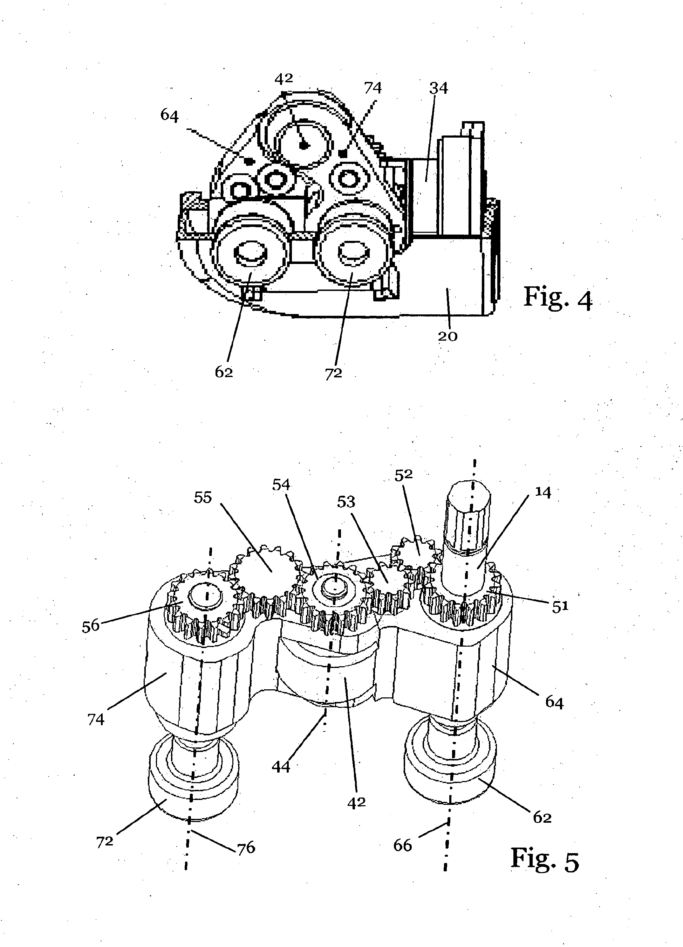

The tool body 20 also houses a gearing 50 that transmits the rotation motion of the motor device 12 to the second seal assembly roller 72. In the shown embodiment the first seal assembly roller 62 is directly driven by the main shaft of the motor device 12 via a drive shaft 14 (see Fig. 5). The gears 51 - 56 of the gearing 50 are attached to the upper side of the first lever 64, the common hinge 42 and the second lever 74. Figs. 3 and 5 show the arrangement of the single gears 51 - 56 in more detail.

As shown in Fig. 3 and Fig. 5 the gearing 50 comprises in this embodiment six single gears 51, 52, 53, 54, 55, 56 which are arranged on the upper side of the first lever 64, the common hinge 42 and the second lever 74, respectively. The first gear 51 is directly connected to the main shaft of the motor device 12 via a drive shaft 14. The second gear 52 and the third gear 53 are rotatable fixed to the first lever 64 of the first roller unit 60. The fourth gear 54 is attached to the common hinge and rotatable around the rotation axis of the common hinge 42. The fifth gear is rotatable fixed to the second lever 74. The sixth gear 56 is rotatable fixed to the second roller unit 70 and is arranged also on the upper side of the second lever 74. All the gears 51, 52, 53, 54, 55, 56 form a sequence of engaging gears that serve for a force transmission from the first roller unit 60 to the second roller unit 70. Since the fourth gear 54 can rotate around the common hinge 42 the force transmission is maintained, even if the distance between the first roller unit 60 and the second roller unit 70 changes during assembly. Therefore, the drive of the first and second seal assembly roller 62, 72 is ensured even if their distance changes. The gear 50 also provides the desired opposite rotational directions of the first and second seal assembly roller 62, 72.

Fig. 4 shows the tool for the assembly of elastomeric seals 1 from below. One can see that the trust control module 34 acts onto the second lever 74 of the second roller unit 70. Thereby it induces a clamping force between the first seal assembly roller 62 and the second seal assembly roller 72. The tool 1 is able to maintain a constant clamping force during the mounting process, even if the flange 3 onto which the elastomeric seal 2 has to be mounted comprises any deviations from the predetermined geometry. The position of the second roller unit 70 is variable but the clamping force - that means the assembly force - is maintained constant.

In Fig. 5 it is shown that the rotation axes of the common hinge 44, of the first roller unit 66 and of the second roller unit 76 are parallel. Thus, it is possible to ensure that the second roller unit 70 rotates with the same speed as the first roller unit 60 but in opposite rotation direction around a parallel rotation axis 74. Fig. 5 also shows the drive shaft 14, that connects the gearing 50 to the motor device 12 attached thereon.

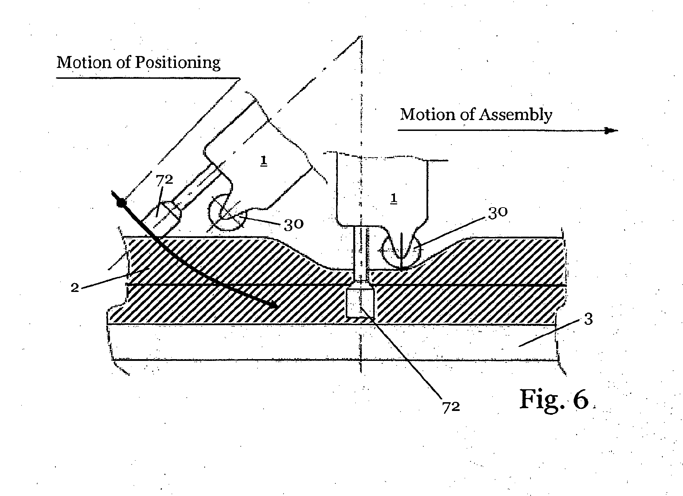

Fig. 6 shows how the tool for the assembly of elastomeric seals 1 may be positioned to the flange 3 of a car body and the elastomeric seal 2 as well as the operation of the tool for the assembly of elastomeric seals 1.

In a preferred embodiment, the elastomeric seal 2 is attached to the flange 3 before the tool for the assembly of elastomeric seals 1 is used to complete the assembly. The elastomeric seal 2 preferably comprises a metallic core - more preferred a u-shaped sheet metal strip - that is surrounded by elastomeric material that forms the actual sealing. The elastomeric seal 2 may be applied by hand or in a semiautomatic or automatic manufacturing step to the flange 3 of a car body, preferably a flange 3. Then, the tool 1 is used to laterally compress the elastomeric seal 2, particularly to deform the U-shaped sheet metal strip in order to securely fix the elastomeric seal 2 to the flange 3 of the car body.

After the seal is loosely attached to the flange 3, the tool for the assembly of elastomeric seals 1 according to the present invention is positioned in a way that the elastomeric seal 2 is located between the two seal assembly rollers 62, 72. This is done by
a. enlarging the distance between the two seal assembly rollers 62, 72,
b. moving the tool 1 as shown in Fig. 6 over the elastomeric seal 2 until the lateral side flanges of the elastomeric seal 2 are arranged between the two seal assembly rollers 62, 72, and
c. reducing the distance between the two seal assembly rollers 62, 72, until a predetermined pressure is applied to the elastomeric seal 2 via the seal assembly rollers 62, 72.

The positioning of the tool for the assembly of elastomeric seals 1 is preferably carried out via a rotatory movement on the tool 1 in a direction of motion of positioning, as shown in Fig. 6.

Then, the actual assembly step by the tool 1 can be started. If the motor 12 of the tool 1 drives the seal assembly rollers 62, 72, the seal assembly rollers 62, 72 compress laterally the elastomeric seal 2, particularly an internal U-shaped metal core as it moves in a direction of a motion of assembly, shown in Fig. 6.

During this clamping step, the seal thrust roller 30 applies a force from above onto the elastomeric seal 2 in order to keep it in the correct position for clamping. The operator can control the movement of the tool for the assembly of elastomeric seals 1. As desired by the operator the tool 1 can be moved forwards or backwards depending on the driving direction of the motor and the rotation direction of the seal assembly rollers 62, 72. During the movement, the seal assembly rollers 62, 72 deform the U-shaped sheet metal strip of the seal 2 in order to clamp the seal 2 to the flange 3 in a form fitting manner.

By means of the inventive construction of the tool 1 in this clamping step a constant and well defined clamping force is applied to the elastomeric seal 2 irrespective of the actual distance between the seal assembly rollers 62, 72. This ensures a perfect quality of assembly of the elastomeric seal 2.

### List of reference signs

- 1: tool for the assembly of elastomeric seals
- 2: elastomeric seal
- 3: car body flange
- 10: shaft
- 12: motor
- 14: drive shaft
- 20: tool body
- 22: drive shaft bushing component
- 24: drive shaft bushings
- 30: seal thrust roller
- 32: adjusting plate
- 34: thrust control module
- 36: bushing
- 38: thrust module fixation part
- 40: pressurized air support
- 42: common hinge
- 44: rotation axis
- 50: gearing
- 51: first gear
- 52: second gear
- 53: third gear
- 54: fourth gear
- 55: fifth gear
- 56: sixth gear
- 60: first roller unit
- 62: first seal assembly roller
- 64: first lever
- 66: rotation axis
- 70: second roller unit
- 72: second seal assembly roller
- 74: second lever
- 76: rotation axis

## Claims

1. Tool for the assembly of elastomeric seals (1), comprising:
a. a first roller unit (60) with first seal assembly roller (62) that is motor-driven via a gearing (50);
b. second roller unit (70) with a second seal assembly roller (72) that is motor-driven via the gearing (50), wherein the second seal assembly roller (72) rotates with the same speed as the first seal assembly roller (62) but in opposite rotation direction; wherein the first seal assembly roller (62) and the second seal assembly roller (72) comprise parallel rotation axes (66, 76) and the distance between the rotation axes (66, 76) is variable;
c. a thrust control module (34), that presses the second seal assembly roller (72) against the first seal assembly roller (62); and
**characterized in that** the tool further comprises
d. an adjusting plate (32) arranged between the thrust control module (34) and a tool body (20) for pre-adjusting the predetermined and variable distance between the first seal assembly roller (62) and the second seal assembly roller (72) by modifying the position of the piston stroke range relative to the tool body (20).

2. Tool for the assembly of elastomeric seals (1) according to claim 1, wherein the gearing (50) is arranged, so that the first seal assembly roller (62) and the second seal assembly roller (72) stay always in force-transmitting connection independent from the distance between the first seal assembly roller (62) and the second seal assembly roller (72).

3. Tool for the assembly of elastomeric seals (1) according to one of the claims 1-2, wherein the first seal assembly roller (62) and the second seal assembly roller (72) are driven by a common motor device (12) via the gearing (50).

4. Tool for the assembly of elastomeric seals (1) according to claim 3, wherein the motor device (12) can rotate clockwise and counter-clockwise.

5. Tool for the assembly of elastomeric seals (1) according to one of the claims 1 to 4, wherein the thrust control module (34) comprises an adjustable thrust force.

6. Tool for the assembly of elastomeric seals (1) according to one of the claims 1 to 5, wherein the thrust control module (34) comprises a pneumatic cylinder.

7. Tool for the assembly of elastomeric seals (1) according to one of the claims 1 to 6, wherein the thrust control module (34) is pivotally fixed by a thrust module fixation part (38) to the second seal assembly roller (72).

8. Tool for the assembly of elastomeric seals (1) according to one of the claims 1 to 7, wherein the first seal assembly roller (62) and the second seal assembly roller (72) are connected to each other by a first lever (64) of the first roller unit (60), a common hinge (42) and a second lever (74) of the second roller unit (70).

9. Tool for the assembly of elastomeric seals (1) according to one of the claims 1 to 8, wherein the gearing (50) consists of at least four transmission gears, wherein one transmission gear is arranged to rotate around a rotation axis (44) of a common hinge (42) of the first and second roller units (60, 70).

10. Tool for the assembly of elastomeric seals (1) according claim 9, wherein the gearing (50) comprises a sequence of gears (51, 52, 53, 54, 55, 56), which stay always in force-transmitting connection independent from the distance between the first seal assembly roller (62) and the second seal assembly roller (72), wherein a first gear (51) is mounted to the drive shaft (14) of the motor device (12), that drives the first seal assembly roller (62), a second gear (52) and a third gear (53) are rotatably fixed to the first lever (64), a fourth gear (54) is arranged to rotate around the rotation axis (44) of the common hinge (42), a fifth gear (55) is rotatably fixed to the second lever (74) and a sixth gear is fixed to the second seal assembly roller (72).

11. Method for the assembly of elastomeric seals to a car body, by means of a tool for the assembly of elastomeric seals (1), the method comprising the steps of:
a. arranging an adjusting plate (32) between a thrust control module (34) and a tool body (20)for pre-adjusting a predetermined and variable distance between a first seal assembly roller (62) and a second seal assembly roller (72) by modifying the position of a piston stroke range relative to the tool body (20);
b. arranging an elastomeric seal (2) between the first seal assembly roller (62) and the second seal assembly roller (72);
c. driving the first seal assembly roller (62) and the second seal assembly roller (72) in contrary rotation directions; and
d. inducing a predetermined clamping force between the first seal assembly roller (62) and the second seal assembly roller (72) by means of the thrust control module (34).

12. Method according to claim 11, wherein in step d. the clamping force is controlled during the assembly process in order to keep the predetermined clamping force constant.

13. Method according to one of the claims 11 or 12, wherein in step c. the first seal assembly roller (62) and the second seal assembly roller (72) stay always in force-transmitting connection independent from the distance between the first seal assembly roller (62) and the second seal assembly roller (72) by means of a gearing (50).

14. Method according to one of the claims 11 to 13, further comprising the step of exchanging the thrust control module (34) in order to provide a different predetermined clamping force.

## Patentansprüche

1. Werkzeug für die Montage von Elastomerdichtungen (1) aufweisend:
a. eine erste Walzeneinheit (60) mit einer ersten Dichtungsanordnungswalze (62), welche über ein Getriebe (50) motorgetrieben ist;
b. eine zweite Walzeneinheit (70) mit einer zweiten Dichtungsanordnungswalze (72), welche über das Getriebe (50) motorgetrieben ist, wobei die zweite Dichtungsanordnungswalze (72) mit der gleichen Geschwindigkeit wie die erste Dichtungsanordnungswalze (62), aber in der entgegengesetzten Rotationsrichtung rotiert; wobei die erste Dichtungsanordnungswalze (62) und die zweite Dichtungsanordnungswalze (72) parallele Rotationsachsen (66, 76) aufweisen und die Distanz zwischen den Rotationsachsen (66, 76) variabel ist;
c. ein Drucksteuerungsmodul (34), welches die zweite Dichtungsanordnungswalze (72) gegen die erste Dichtungsanordnungswalze (62) drückt; und
**dadurch gekennzeichnet, dass** das Werkzeug weiterhin aufweist
d. eine Einstellungsplatte (32), welche zwischen dem Drucksteuerungsmodul (34) und einem Werkzeugkörper (20) angeordnet ist, zum Voreinstellen der vorbestimmten und variablen Distanz zwischen der ersten Dichtungsanordnungswalze (62) und der zweiten Dichtungsanordnungswalze (72) durch Modifizieren der Position des Kolbenhubbereichs relativ zu dem Werkzeugkörper (20).

2. Werkzeug für die Montage von Elastomerdichtungen (1) nach Anspruch 1, wobei das Getriebe (50) so angeordnet ist, dass die erste Dichtungsanordnungswalze (62) und die zweite Dichtungsanordnungswalze (72) immer in Kraftübertragungsverbindung bleiben, unabhängig von der Distanz zwischen der ersten Dichtungsanordnungswalze (62) und der zweiten Dichtungsanordnungswalze (72).

3. Werkzeug für die Montage von Elastomerdichtungen (1) nach einem der Ansprüche 1 bis 2, wobei die erste Dichtungsanordnungswalze (62) und die zweite Dichtungsanordnungswalze (72) durch eine gemeinsame Motorvorrichtung (12) über das Getriebe (50) angetrieben werden.

4. Werkzeug für die Montage von Elastomerdichtungen (1) nach Anspruch 3, wobei die Motorvorrichtung (12) im Uhrzeigersinn und gegen den Uhrzeigersinn rotieren kann.

5. Werkzeug für die Montage von Elastomerdichtungen (1) nach einem der Ansprüche 1 bis 4, wobei das Drucksteuerungsmodul (34) eine einstellbare Druckkraft aufweist.

6. Werkzeug für die Montage von Elastomerdichtungen (1) nach einem der Ansprüche 1 bis 5, wobei das Drucksteuerungsmodul (34) einen pneumatischen Zylinder aufweist.

7. Werkzeug für die Montage von Elastomerdichtungen (1) nach einem der Ansprüche 1 bis 6, wobei das Drucksteuerungsmodul (34) durch ein Druckmodul-Befestigungsteil (38) schwenkbar an der zweiten Dichtungsanordnungswalze (72) befestigt ist.

8. Werkzeug für die Montage von Elastomerdichtungen (1) nach einem der Ansprüche 1 bis 7, wobei die erste Dichtungsanordnungswalze (62) und die zweite Dichtungsanordnungswalze (72) miteinander durch einen ersten Hebel (64) der ersten Walzeneinheit (60), ein gemeinsames Gelenk (42) und einen zweiten Hebel (74) der zweiten Walzeneinheit (70) verbunden sind.

9. Werkzeug für die Montage von Elastomerdichtungen (1) nach einem der Ansprüche 1 bis 8, wobei das Getriebe (50) zumindest aus vier Übertragungszahnrädern besteht, wobei ein Übertragungszahnrad für eine Rotation um eine Rotationsachse (44) eines gemeinsamen Gelenks (42) der ersten und zweiten Walzeneinheiten (60, 70) angeordnet ist.

10. Werkzeug für die Montage von Elastomerdichtungen (1) nach Anspruch 9, wobei das Getriebe (50) eine Sequenz von Zahnrädern (51, 52, 53, 54, 55, 56) aufweist, welche immer in Kraftübertragungsverbindung bleiben, unabhängig von der Distanz zwischen der ersten Dichtungsanordnungswalze (62) und der zweiten Dichtungsanordnungswalze (72), wobei ein erstes Zahnrad (51) an der Antriebswelle (14) der Motorvorrichtung (12) befestigt ist, welche die erste Dichtungsanordnungswalze (62) antreibt, wobei ein zweites Zahnrad (52) und ein drittes Zahnrad (53) rotierbar an den ersten Hebel (64) befestigt sind, wobei ein viertes Zahnrad (54) für eine Rotation um die Rotationsachse (44) des gemeinsamen Gelenks (42) angeordnet ist, wobei ein fünftes Zahnrad (55) rotierbar an den zweiten Hebel (74) befestigt ist und ein sechstes Zahnrad an der zweiten Dichtungsanordnungswalze (72) befestigt ist.

11. Verfahren für die Montage von Elastomerdichtungen an einer Fahrzeugkarosserie mittels eines Werkzeugs für die Montage von Elastomerdichtungen (1), wobei das Verfahren die folgenden Schritte aufweist:
a. Anordnen einer Einstellungsplatte (32) zwischen einem Drucksteuerungsmodul (34) und einem Werkzeugkörper (20) zum Voreinstellen einer vorbestimmten und variablen Distanz zwischen einer ersten Dichtungsanordnungswalze (62) und einer zweiten Dichtungsanordnungswalze (72) durch Modifizieren der Position eines Kolbenhubbereichs relativ zu dem Werkzeugkörper (20);
b. Anordnen einer Elastomerdichtung (2) zwischen der ersten Dichtungsanordnungswalze (62) und der zweiten Dichtungsanordnungswalze (72);
c. Antreiben der ersten Dichtungsanordnungswalze (62) und der zweiten Dichtungsanordnungswalze (72) in entgegengesetzten Rotationsrichtungen; und
d. Induzieren einer vorbestimmten Klemmkraft zwischen der ersten Dichtungsanordnungswalze (62) und der zweiten Dichtungsanordnungswalze (72) mittels des Drucksteuerungsmoduls (34).

12. Verfahren nach Anspruch 11, wobei in Schritt d. die Klemmkraft während des Anordnungsprozesses gesteuert wird, um die vorbestimmte Klemmkraft konstant zu halten.

13. Verfahren nach einem der Ansprüche 11 oder 12, wobei in Schritt c. die erste Dichtungsanordnungswalze (62) und die zweite Dichtungsanordnungswalze (72) aufgrund eines Getriebes (50) immer in Kraftübertragungsverbindung bleiben, unabhängig von der Distanz zwischen der ersten Dichtungsanordnungswalze (62) und der zweiten Dichtungsanordnungswalze (72).

14. Verfahren nach einem der Anspruch 11 bis 13, weiterhin aufweisend den Schritt des Austauschens des Drucksteuerungsmoduls (34), um eine unterschiedliche vorbestimmte Klemmkraft bereitzustellen.

## Revendications

1. Outil pour le montage de joints en élastomère (1), comprenant :
a. un premier bloc à galet (60) avec un premier galet de montage de joint (62) qui est entrainé par un moteur via un engrenage (50) ;
b. un second bloc à galet (70) avec un second galet de montage de joint (72) qui est entrainé par un moteur via l'engrenage (50), le second galet de montage de joint (72) tournant à la même vitesse que le premier galet de montage de joint (62) mais dans un sens de rotation opposé, le premier galet de montage de joint (62) et le second galet de montage de joint (72) comprenant des axes de rotation parallèles (66, 76) et la distance entre les axes de rotation (66, 76) étant variable,
c. un module de contrôle de poussée (34), qui appuie le second galet de montage de joint (72) contre le premier galet de montage de joint (62) ; et
**caractérisé en ce que** l'outil comprend en outre :
d. une plaque d'ajustement (32) disposée entre le module de contrôle de poussée (34) et un corps d'outil (20) pour préajuster la distance prédéterminée et variable entre le premier galet de montage de joint (62) et le second galet de montage de joint (72) par modification de la position de l'étendue de la course d'un piston par rapport au corps d'outil (20).

2. Outil pour le montage de joints en élastomère (1) selon la revendication 1, dans lequel l'engrenage (50) est configuré de telle sorte que le premier galet de montage de joint (62) et le second galet de montage de joint (72) se trouvent toujours en liaison de transmission de force indépendamment de la distance entre le premier galet de montage de joint (62) et le second galet de montage de joint (72).

3. Outil pour le montage de joints en élastomère (1) selon l'une des revendications 1 à 2, dans lequel le premier galet de montage de joint (62) et le second galet de montage de joint (72) sont entrainés par un appareil moteur commun (12) via l'engrenage (50).

4. Outil pour l'assemblage de joints en élastomère (1) selon la revendication 1, dans lequel le dispositif moteur (12) peut tourner dans le sens des aiguilles d'une montre et dans le sens contraire.

5. Outil pour le montage de joints en élastomère (1) selon l'une des revendications 1 à 4, dans lequel le module de contrôle de poussée (34) comprend une force de poussée ajustable.

6. Outil pour le montage de joints en élastomère (1) selon l'une des revendications 1 à 5, dans lequel le module de contrôle de poussée (34) comprend un cylindre pneumatique.

7. Outil pour le montage de joints en élastomère (1) selon l'une des revendications 1 à 6, dans lequel le module de contrôle de poussée (34) est fixé à pivotement par une pièce de fixation du module de poussée (38) sur le second galet de montage de joint (72).

8. Outil pour le montage de joints en élastomère (1) selon l'une des revendications 1 à 7, dans lequel le premier galet de montage de joint (62) et le second galet de montage de joint (72) sont reliés l'un à l'autre par un premier levier (64) du premier ensemble à galet (60), une charnière commune (42) et un second levier (74) du second bloc à galet (70).

9. Outil pour l'assemblage de joints en élastomère (1) selon l'une des revendications 1 à 8, dans lequel l'engrenage (50) consiste en au moins quatre pignons de transmission, un pignon de transmission étant disposé de manière à tourner autour d'un axe de rotation (44) d'une charnière commune (42) du premier et du second bloc à galet (60, 70).

10. Outil pour le montage de joints en élastomère (1) selon la revendication 9, dans lequel l'engrenage (50) comprend une succession de pignons (51, 52, 53, 54, 55, 56), qui restent toujours en liaison de transmission de force indépendamment de la distance entre le premier galet de montage de joint (62) et le second galet de montage de joint (72), un premier pignon (51) étant monté sur l'arbre d'entrainement (14) du dispositif à moteur (12), qui entraine le premier galet de montage de joint (62), un second pignon (52) et un troisième pignon (53) étant fixés à rotation au premier levier (64), un quatrième pignon (54) étant disposé de manière à tourner autour de l'axe de rotation (44) de la charnière commune (42), un cinquième pignon (55) étant fixé à rotation au second levier (74) et un sixième pignon étant fixé au second galet de montage de joint (72).

11. Procédé de montage de joints en élastomère sur une carrosserie de véhicule, au moyen d'un outil pour le montage de joints en élastomère (1), le procédé comprenant les étapes suivantes :
a. mise en place d'une plaque d'ajustement (32) entre un module de contrôle de poussée (34) et un corps d'outil (20) pour préajuster une distance prédéterminée et variable entre un premier galet de montage de joint (62) et un second galet de montage de joint (72) par modification de la position d'une plage de course d'un piston par rapport au corps de l'outil (20) ;
b. mise en place d'un joint en élastomère (2) entre le premier galet de montage de joint (62) et le second galet de montage de joint (72) ;
c. entrainement du premier galet de montage de joint (62) et du second galet de montage de joint (72) dans des sens de rotation opposés ; et
d. application d'une force de pincement prédéterminée entre le premier galet de montage de joint (62) et le second galet de montage de joint (72) au moyen du module de contrôle de poussée (34).

12. Procédé selon la revendication 11, dans lequel à l'étape d) la force de pincement est contrôlée durant le processus de montage afin de maintenir constante la force de pincement prédéterminée.

13. Procédé selon l'une des revendications 11 ou 12, dans lequel à l'étape c. le premier galet de montage de joint (62) et le second galet de montage de joint (72) restent toujours en liaison de transmission de force indépendamment de la distance entre le premier galet de montage de joint (62) et le second galet de montage de joint (72) au moyen d'un engrenage (50).

14. Procédé selon l'une des revendications 11 à 13, comprenant en outre l'étape d'échange du module de contrôle de poussée (34) afin de disposer d'une force de pincement prédéterminée différente.
